# EUROPÄISCHE PATENTSCHRIFT

(11) **EP 4 438 291 B1**
(45) Veröffentlichungstag und Bekanntmachung des Hinweises auf die Patenterteilung: **05.11.2025**
(21) Anmeldenummer: 24165386.4
(22) Anmeldetag: 22.03.2024
(51) Int. Cl.: B32B 5/02, B32B 5/06, B32B 5/26

(54) **KAMMERGEWEBE UND VERFAHREN ZUR VERWENDUNG**
CHAMBER FABRIC AND METHOD OF USE
TISSU DE CHAMBRE ET PROCÉDÉ D'UTILISATION

(30) Priorität: 28.03.2023 DE 102023107776
(43) Veröffentlichungstag der Anmeldung: 02.10.2024
(73) Patentinhaber: Haver & Boecker OHG, 59302 Oelde (DE)
(72) Erfinder: John, Detlef, 59229 Ahlen (DE); Butenkemper, Stefan, 48324 Sendenhorst (DE)
(74) Vertreter: BSB Patentanwälte Schütte & Engelen Partnerschaft mbB

(56) Entgegenhaltungen:
- DE-A1- 102019 118 298
- DE-U1- 202004 002 663
- US-A1- 2007 040 368

## Beschreibung

Die vorliegende Erfindung betrifft ein Kammergewebe umfassend wenigstens zwei im Abstand zueinanderstehende Gewebelagen, wobei jede Gewebelage in wenigstens einer vorbestimmten Bindungsart festgelegte Kettelemente und Schusselemente umfasst. Dabei sind die Gewebelagen wenigstens in dem Bereich wenigstens eines Gewebekörpers durch flottierende Abstandhalteelemente miteinander verbunden, wobei die Abstandhalteelemente wechselweise von der einen Gewebelage zu der anderen Gewebelage verspringen und die wenigstens im Bereich zwischen den Gewebelagen bindungsfrei sind. So wird zwischen den Gewebelagen und den Abstandhalteelementen wenigstens entlang einer ersten Erstreckung des Gewebekörpers wenigstens eine wenigstens abschnittsweise begrenzte Kammer ausgebildet. Weiterhin betrifft die vorliegende Erfindung ein zusammengesetztes Gewebe und ein Verfahren zu Verwendung eines Kammergewebes.

Gewebe finden in verschiedensten Ausgestaltungen in unterschiedlichsten Bereichen Anwendung. So können beispielsweise Gewebe unter anderem im Bereich der Filtration und/oder als Trägermaterial in einem Verbundwerkstoff und/oder im Designbereich eingesetzt werden.

Insbesondere Drahtgewebe können vielfältig eingesetzt werden und sind vielfältige Ausführungen bekannt geworden. Je nach Anwendung können zum Beispiel Gewebe vorteilhaft eingesetzt werden, welche (Hohl) kammern bzw. Taschen bzw. kammerartige Strukturen aufweisen. In solche Taschen können dann beispielsweise Substrate bzw. riesel- und/oder schüttfähige Stoffe oder auch andere Objekte bzw. Bauteile eingeführt werden.

Die DE 20 2004 002 663 U1 beschreibt z. B. ein solches Kammergewebe, wobei zwischen zwei Gewebelagen durch flottierende Abstandhalteelemente Kammern gebildet werden, wobei ein solches Gewebe sogar in einem einzigen Webprozess hergestellt werden kann. Nachteilig ist jedoch, dass die beiden Gewebelagen nach der Herstellung relativ eng aufeinanderliegen und das Öffnen bzw. Ausformen der Kammern relativ schwierig und zeitaufwendig ist.

Es ist deshalb die Aufgabe der vorliegenden Erfindung, ein Kammergewebe zur Verfügung zu stellen, bei welchem die Kammern leichter zu öffnen sind.

Diese Aufgabe wird gelöst durch ein Kammergewebe mit den Merkmalen des Anspruchs 1, durch ein zusammengesetztes Gewebe mit den Merkmalen des Anspruchs 13 und durch ein Verfahren mit den Merkmalen des Anspruchs 14. Bevorzugte Weiterbildungen der Erfindung sind Gegenstand der Unteransprüche. Weitere Vorteile und Merkmale der vorliegenden Erfindungen ergeben sich aus der allgemeinen Beschreibung und der Beschreibung des Ausführungsbeispiels.

Das erfindungsgemäße Kammergewebe umfasst wenigstens zwei im Abstand zueinanderstehende Gewebelagen, wobei jede Gewebelage in wenigstens einer vorbestimmten Bindungsart festgelegte Kettelemente und Schusselemente umfasst. Dabei sind die Gewebelagen wenigstens in dem Bereich wenigstens eines Gewebekörpers durch flottierende Abstandhalteelemente miteinander verbunden, wobei die Abstandhalteelemente wechselweise von der einen Gewebelage zu der anderen Gewebelage verspringen, wobei die Abstandhalteelemente wenigstens im Bereich zwischen den Gewebelagen bindungsfrei sind. So wird zwischen den Gewebelagen und den Abstandhalteelementen wenigstens entlang einer ersten Erstreckung des Gewebekörpers wenigstens eine wenigstens abschnittsweise begrenzte Kammer ausgebildet. Dabei ist wenigstens an einer Seite des Gewebekörpers in Richtung der ersten Erstreckung des Gewebekörpers wenigstens eine Gewebelage als freier Gewebeabschnitt weitergeführt.

Der Gewebekörper des Kammergewebes ist anmeldungsgemäß der Bereich des Kammergewebes, in welchem wenigstens eine Kammer ausgebildet ist. So ist insbesondere unter dem Begriff Gewebekörper eine durch die Gewebelagen in Verbindung mit den Abstandhalteelementen ausgebildeter dreidimensionale Gewebestruktur zu verstehen.

Der Begriff Kammer ist dahingehend zu verstehen, dass eine gewisse räumliche Begrenzung zwischen den beiden Gewebelagen gebildet wird, wobei insbesondere keine geschlossene und insbesondere keine fluiddichte Kammer hierunter zu verstehen ist. Insbesondere werden durch die Gewebelagen bzw. durch die verwendete Bindungsart der Gewebelagen und somit z. B. durch die Maschenweite definiert, was von der Kammer zurückgehalten wird, wenn beispielsweise ein Substrat in die Kammer eingefüllt wird.

Vorzugsweise verlaufen die Abstandhalteelemente in der Richtung der Ketteelemente bzw. in der Richtung der Schusselemente.

Insbesondere können die flottierenden Abstandhalteelemente bereits während des Webvorgangs mit in das Gewebe eingebracht werden. Je nach Ausgestaltung können anmeldungsgemäß die flottierenden Abstandhalteelemente die beiden Gewebelagen miteinander vernähen und/oder in einem anderen Prozess nachträglich in die Gewebelagen eingebracht und/oder an den Gewebelagen angebracht werden bzw. diese miteinander verbinden, sodass wenigstens eine Kammer zwischen den Gewebelagen entsteht.

Je nach Ausführung können die Abstandhalteelemente vorzugsweise z. B. auch mit den Gewebelagen verklebt werden. Insbesondere können auch die Gewebelagen miteinander vernäht, verklebt, vernietet oder anders miteinander verbunden sin.

Eine Kammer eignet sich anmeldungsgemäß beispielsweise insbesondere zur Aufnahme von granulatartigen oder anderen schütt- bzw. rieselfähigen Stoffen und/oder Strukturen. Auch andere Gegenstände oder Objekte können in die Kammer eingeführt werden.

Die erste Erstreckung des Gewebekörpers ist insbesondere die Erstreckung, die der Laufrichtung der Kammer entspricht.

Ein freier Gewebeabschnitt ist insbesondere ein Gewebeabschnitt, welcher nicht durch Abstandhalteelemente mit der weiteren Gewebelage verbunden ist. So ist es insbesondere vorgesehen, dass die Kammer bzw. dass das die Kammer definierende Gewebe bzw. die beiden Gewebelagen in den offenen Gewebeabschnitt überlaufen.

Das erfindungsgemäße Kammergewebe bietet viele Vorteile. Einerseits wird ein Gewebe bereitgestellt, welches wenigstens eine Kammer umfasst, in welche beispielsweise ein Substrat eingefüllt werden kann. Ein erheblicher Vorteil ist, dass durch das Vorsehen wenigstens eines freien Gewebeabschnitts an wenigstens einer offenen Seite der Kammer erreicht wird, dass die Kammer mittels des freien Gewebeabschnitts z. B. aufgezogen werden kann bzw. geöffnet werden kann.

Bei der Herstellung des erfindungsgemäßen Kammergewebes bzw. nach der Herstellung liegen die beiden Gewebelagen vorzugsweise bzw. in der Regel relativ flach bzw. flach aufeinander, wodurch die Kammer noch nicht bzw. noch nicht vollständig ausgebildet ist. Durch den freien Gewebeabschnitt wird es wesentlich erleichtert, die Kammer bzw. wenigstens den Eingang der Kammer zu öffnen bzw. vorzuformen, sodass die Kammer alleine durch das Aufziehen und/oder beispielsweise durch das anschließende Einführen eines bestimmten Werkzeuges und/oder eines Füllorgans wie beispielsweise einer Fülllanze geöffnet werden kann.

Ohne den freien Gewebeabschnitt ist das Öffnen der Kammern in der Regel sehr schwierig, zeitaufwendig und insbesondere das automatische Einführen von Werkzeugen und/oder beispielsweise einer Fülllanze kann nicht zuverlässig gewährleistet werden.

Bevorzugt sind an wenigstens einer Seite des Gewebekörpers in Richtung des erst der ersten Erstreckung des Gewebekörpers beide Gewebelagen wenigstens abschnittsweise als freier Gewebeabschnitt bzw. als freie Gewebeabschnitte weitergeführt. So wird erreicht, dass die beiden Gewebelagen ohne flottierende Abstandhalteelemente weitergeführt werden, sodass anschließende freie Gewebelagen bereitgestellt werden, welche beispielsweise zum Öffnen der Kammer leicht ergriffen und auseinandergezogen werden können.

Besonders bevorzugt ist an beiden Seiten des Gewebekörpers in Richtung der ersten Erstreckung des Gewebekörpers wenigstens eine Gewebelage und insbesondere sind (jeweils) beide Gewebelagen als freier Gewebeabschnitt weitergeführt. Dabei ist hierunter zu verstehen, dass an beiden Seiten bzw. an beiden Öffnungen bzw. Enden der Kammer freie Gewebeabschnitte vorgesehen sind. Beim Herstellen eines solchen Kammergewebes würden zunächst die freien Gewebeabschnitte an der einen Seite hergestellt, welche dann durch das Vorsehen von flottierenden Abstandhalteelementen in den die Kammer umfassenden Gewebekörper übergehen und anschließend wird der Herstellungsprozess wieder ohne Abstandhalteelemente fortgesetzt, um auch auf der anderen Seite des Gewebekörpers freie Gewebeabschnitte zu erhalten.

In zweckmäßigen Weiterbildungen ist das Kammergewebe in einem einzigen Webvorgang hergestellt. Dabei ist es je nach Ausgestaltung möglich, sowohl die beiden Gewebelage als auch die damit verbundenen bzw. in den Webprozess integrierten Abstandhalteelemente in einem Vorgang herzustellen.

Vorzugsweise werden die Abstandhalteelemente durch Ketteelemente und/oder Schusselemente bereitgestellt. Insbesondere bei einer solchen Ausgestaltung kann das Kammergewebe in einem einzigen Webprozess hergestellt werden.

Vorzugsweise weisen der freie Gewebeabschnitt und die Gewebelagen im Bereich des Gewebekörpers gleiche und/oder unterschiedliche Bindungsarten auf. Insbesondere ist es möglich, dass der freie Gewebeabschnitt eine andere Bindungsart aufweist, wobei unter Bindungsart insbesondere auch die Größe der Maschen zu verstehen ist.

In zweckmäßigen Ausgestaltungen dient der freie Gewebeabschnitt wenigstens abschnittsweise als Handhabungsabschnitt. So ist es insbesondere möglich, dass der freie Gewebeabschnitt bzw. die Gewebeabschnitte zum Aufziehen bzw. Formen des Gewebekörpers verwendet werden. So ist es durch das Vorsehen der freien Gewebeabschnitte möglich, das Aufziehen der Kammern bzw. das Öffnen der Kammern bzw. das Ausformen des Gewebekörpers erheblich zu vereinfachen.

Bevorzugt dient der freie Gewebeabschnitt wenigstens abschnittsweise als Befestigungsabschnitt. Insbesondere wenn weitere Bauteile an dem Kammergewebe angeordnet bzw. damit verbunden bzw. daran befestigt werden sollen, kann dies vorzugsweise über den freien Gewebeabschnitt erfolgen, der je nach Ausgestaltung zum Verkleben, zum Verklemmen, zum Verschrauben, zum Vernieten und/oder zum anderweitigen Verbinden mit anderen Gegenständen bzw. Bauteilen dienen kann.

Besonders bevorzugt umfasst wenigstens eine Gewebelage wenigstens eine Drahtgewebelage. Dabei kann eine Drahtgewebelage insbesondere aus Metalldrähten gefertigt sein oder solche umfassen. Je nach Ausgestaltung kann aber neben metallischen Werkstoffen auch ein anderer Werkstoff zusätzlich oder ausschließlich verwendet werden. Insbesondere ist es möglich, dass wenigstens eine der Gewebelage als sogenanntes Hybridgewebe ausgebildet ist.

Vorzugsweise sind die Ketteelemente, die Schusselemente und/oder die Abstandhalteelemente wenigstens teilweise aus Draht, Kunststoff, Carbon und/oder Fiberglas und/oder aus einem anderen geeigneten Material gefertigt. Dabei sind die Ketteelemente, die Schusselemente und/oder die Abstandhalteelemente wenigstens teilweise und insbesondere vollständig aus den zuvor genannten Materialien gefertigt. Insbesondere bei der Verwendung von Kunststoff, Carbon und/oder Fiberglas kann dieses Material vorzugsweise als Faser und/oder Faden vorgesehen sein. Insbesondere können unterschiedliche (z. B. physikalische) Materialeigenschaften, z. B. die Ausdehnungskoeffizienten verschiedenen Materialien genutzt wird, um das Gewebe einzustellen.

In vorteilhaften Weiterbildungen sind die Verbindungsstellen der Abstandhalteelemente mit der ersten und der zweiten Gewebelage versetzt zueinander vorgesehen. Durch eine derartige Ausgestaltung wird es insbesondere möglich, dreieckige bzw. rautenförmige oder andersförmige Kammern herzustellen, wobei insbesondere bevorzugt ist, dass die Kammern versetzt zueinander vorgesehen sind. So werden quasi eine obere und eine untere Kammerlage bereitgestellt, die vorzugsweise ineinandergreifen, sodass die beiden Gewebelagen im Bereich des Gewebekörpers im Wesentlichen parallel zueinander verlaufen, sodass durch das Verbinden mit den Abstandhalteelementen die beiden Gewebelage nicht aufeinander zu gezogen werden und sich insbesondere nicht berühren.

Bevorzugt bildet wenigstens eine Gewebelage wenigstens eine Wandung einer Kammer, wobei die anderen Wandungen von den Abstandhalteelementen gebildet werden. Dabei ist unter einer Wandung insbesondere eine wenigstens abschnittsweise Begrenzung zwischen zwei Kammern bzw. die Begrenzung einer Kammer zu verstehen. Es ist insbesondere keine geschlossene bzw. dichte Wandung gemeint, da die Wandung durch die Gewebelagen und/oder vorzugsweise parallel zueinander verlaufende Abstandhalteelemente gebildet werden.

Besonders bevorzugt sind zwei Lagen von Kammern vorgesehen, wobei ein Abstandhalteelement die Wandung von wenigstens einer oberen und wenigstens einer unteren Kammer bildet. Dabei können die obere und die untere Kammerlage auch auf einer Höhe angeordnet sein, wobei die obere und untere Kammerlage dann ineinandergreifen.

Vorzugsweise ist die Kammer an wenigstens einer Seite geschlossen. Durch eine solche Ausgestaltung wird es möglich, dass beispielsweise ein Substrat oder Gegenstände bzw. Elemente bzw. Objekte in die Kammer eingeführt bzw. eingefüllt werden können.

Insbesondere ist die Kammer geschlossen gewebt. So kann eine an einer Seite geschlossene Kammer bereits in dem Webprozess erzeugt werden.

Alternativ kann die Kammer auch durch das Verkleben der beiden Gewebelagen verschlossen und/oder die Kammer wird durch das Einkleben, Einsetzen und/oder Einpressen und/oder das anderweitige Verbinden mit einem Verschlusselement verschlossen.

Hierzu kann insbesondere der freie Gewebeabschnitt verwendet werden.

Bevorzugt sind mehr als zwei Gewebelagen vorgesehen, wobei die Abstände zwischen den einzelnen Gewebelagen insbesondere gleich und/oder unterschiedlich sind.

Vorzugsweise ist der maximal mögliche Abstand zwischen den Gewebelagen durch die freie Länge der Abstandhalteelemente bestimmt. Dabei ist es insbesondere vorgesehen, dass die beiden Gewebelagen des Kammergewebes nach dem Herstellen bzw. nach dem Webprozess flach aufeinanderliegen, wobei durch die jeweils nicht eingewebte bzw. freie Länge der Abstandhalteelemente der maximale Abstand und somit die Kammergröße definiert werden können.

Bevorzugt bestehen die Kettelemente und die Schusselemente wenigstens teilweise aus unterschiedlichen Materialien. Auch die beiden Gewebelagen können wenigstens teilweise aus unterschiedlichen Materialien bestehen. Die Drahtgewebelagen können vorzugsweise in gleicher und/oder in unterschiedlicher Bindungsart ausgebildet sein.

Das erfindungsgemäße zusammengesetzte Gewebe umfasst wenigstens zwei Kammergewebe, wie sie zuvor beschrieben wurden.

Dabei sind die beiden Kammergewebe insbesondere in geeigneter Art und Weise miteinander verbunden.

Es ist insbesondere möglich, dass zwei Kammergewebe mit nur einem freien Gewebeabschnitt so miteinander verbunden werden, dass ein Stapel von Kammern entsteht, wobei jeweils wenigstens an den Gewebelagen ganz außen ein freier Gewebeabschnitt jeweils eines Kammergewebes vorliegt. Auch so kann eine vorteilhafte Handhabung des Kammergewebes bzw. das Öffnen der Kammern erreicht werden.

Insgesamt bietet auch das zusammengesetzte Gewebe die Vorteile, wie sie zuvor schon zu dem erfindungsgemäßen Kammergewebe ausgeführt worden.

Das erfindungsgemäße Verfahren zum Verwenden eines Kammergewebes, wie es zuvor beschrieben wurde, ist gekennzeichnet durch das Öffnen der Kammer mithilfe des freien Gewebeabschnitts.

Dabei wird wenigstens das eine Ende bzw. die eine Öffnung wenigstens einer Kammer mittels des freien Gewebeabschnitts geöffnet bzw. vorgeöffnet bzw. geformt.

Auch das erfindungsgemäße Verfahren bietet die Vorteile, wie sie zuvor schon zu dem erfindungsgemäßen Kammergewebe dem zusammengesetzten Gewebe ausgeführt wurden.

Vorzugsweise umfassen beide Gewebelage jeweils wenigstens einen freien Gewebeabschnitt, wobei das Öffnen der Kammer wenigstens abschnittsweise durch das Auseinanderbewegen der freien Gewebeabschnitte erfolgt. Damit kann insbesondere wenigstens eine Öffnung der Kammer bzw. ein erster Bereich der Kammer geöffnet und/oder vorgeformt werden, sodass beispielsweise ein Einführbereich für eine Fülllanze oder einen anderen Gegenstand bereitgestellt wird.

Insbesondere kann das Öffnen durch ein Auseinanderziehen, vorzugsweise zusammen mit einer Querbewegung erfolgen, sodass ein entsprechendes Aufstellen der Kammern erreicht wird.

Weitere Vorteile und Merkmale der vorliegenden Erfindung ergeben sich aus dem Ausführungsbeispiel, welches im Folgenden mit Bezug auf die beiliegenden Figuren erläutert wird.

In den Figuren zeigen:
- Fig. 1a: eine rein schematische Darstellung eines Ausführungsbeispiels eines erfindungsgemäßen Kammergewebes in einer perspektivischen Ansicht;
- Fig. 1b: die Vorlage (Foto) für Figur 1a;
- Fig. 2a: eine rein schematische Darstellung eines anderen Ausführungsbeispiels eines erfindungsgemäßen Kammergewebes in einer perspektivischen Ansicht;
- Fig. 2b: die Vorlage (Foto) für Figur 2a;
- Fig. 3: eine rein schematische Darstellung eines weiteren Ausführungsbeispiels eines erfindungsgemäßen Kammergewebes in einer perspektivischen Ansicht; und
- Fig. 4: eine rein schematische Darstellung eines anderen Ausführungsbeispiels eines erfindungsgemäßen Kammergewebes in Seitenansicht.

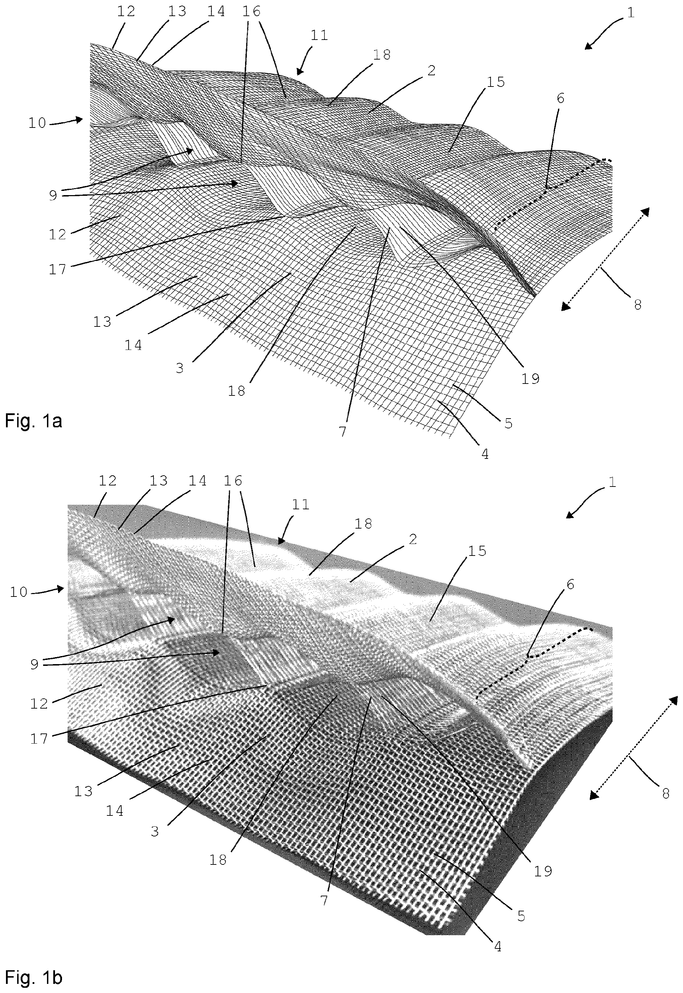

In Figur 1a ist rein schematisch ein Ausführungsbeispiel eines erfindungsgemäßen Kammergewebes 1 in einer perspektivischen Ansicht dargestellt. Dabei umfasst das hier gezeigte Kammergewebe 1 eine erste Gewebelage 2 und eine zweite Gewebelage 3, welche im Wesentlichen parallel zueinander angeordnet sind.

Das Kammergewebe 1 weist in dem hier gezeigten Ausführungsbeispiel einen Gewebekörper 6 auf, welcher hier einen Bereich des Kammergewebes 1 definiert, in welchem die Gewebelagen 2, 3 mithilfe von flottierenden Abstandhalteelementen 7 so miteinander verbunden sind, dass Kammern 9 bzw. taschenartige Strukturen im Bereich des Gewebekörpers 6 entstehen.

Je nach Ausgestaltung und Anwendung können für das Kammergewebe 1 bzw. für die Gewebelagen 2, 3 und die Abstandhalteelemente 7 gleiche oder auch unterschiedliche Materialien verwendet werden. In dem hier gezeigten Ausführungsbeispiel ist ein reines Drahtgewebe vorgesehen, sodass die Ketteelemente 4 und die Schusselemente 5 und auch die Abstandhalteelemente 7 hier aus Draht bestehen bzw. durch Drähte zur Verfügung gestellt werden. Somit sind die beiden Gewebelagen 2, 3 hier Drahtgewebelagen 15.

Die Kammern 9 des gezeigten Kammergewebes 1 können je nach Anwendung und Ausgestaltung mit verschiedenen Objekten, Gegenständen bzw. Substraten und/oder dergleichen gefüllt werden.

Dazu sind die Kammern 9 in dem hier gezeigten Ausführungsbeispiel an der Seite 11 der Kammern 9 mit verschlossen vorgesehen. Dabei sind hier die Kammern 9 an der Seite 11 geschlossen gewebt, sodass die geschlossenen Kammern 9 direkt beim Herstellungsprozess bzw. durch den Webprozess hergestellt wird. Je nach Ausgestaltung können die Kammern 9 aber auch zunächst offen vorgesehen werden und anschließend bei Bedarf auf eine geeignete Art verschlossen werden. So können beispielsweise die Kammern verklebt oder auch verklemmt werden oder z. B. auch mit bestimmten Verschlusselementen verschlossen werden.

Der Gewebekörper 6 weist eine erste Erstreckung auf, welche in dem hier gezeigten Ausführungsbeispiel der Laufrichtung der Kammern 9 entspricht. Erfindungsgemäß schließt sich in Richtung der ersten Erstreckung an den Gewebekörper 6 wenigstens ein freier Gewebeabschnitt 12 wenigstens an einer Gewebelage 2, 3 an. In dem hier gezeigten Ausführungsbeispiel sind an der Seite 10 der Kammern an 9 an beiden Gewebelage 2, 3 freie Gewebeabschnitte 2 vorgesehen.

Durch das Vorsehen der freien Gewebeabschnitte 2 wird die Handhabung des Kammergewebes 1 erheblich erleichtert. So ist in dem gezeigten Ausführungsbeispiel jeder Gewebeabschnitt 12 als Handhabungsabschnitt 13 vorgesehen, über welchen das fertiggestellte Kammergewebe 1 geöffnet werden kann. So wird es möglich, dass beispielsweise durch das Ergreifen und Auseinanderziehen der beiden freien Gewebeabschnitt 12 die zunächst durch das Herstellungsverfahren aufeinanderliegenden Gewebelagen 2,3 auseinandergezogen werden, sodass sich die Kammern 9 öffnen bzw. ausbilden.

Je nach Ausgestaltung kann zumindest wenigstens der Anfang der Kammer 9 so weit aufgezogen werden, dass beispielsweise ein entsprechendes Werkzeug oder auch ein Füllorgan wie beispielsweise eine Fülllanze zuverlässig und ungestört in die Kammer 9 eintauchen kann.

Je nach Ausgestaltung kann wie in dem hier gezeigten Ausführungsbeispiel der freie Gewebeabschnitt 12 auch als Befestigungsabschnitt 14 vorgesehen sein. So kann beispielsweise ein Verschlusselement oder ein beliebiges anderes Bauteil an bzw. wenigstens abschnittsweise in einer Kammer 9 vorgesehen werden und über den freien Gewebeabschnitt 12 bzw. den Verbindungsabschnitt 14 befestigt werden.

So kann beispielsweise ein Verbindungselement oder ein Verschlusselement mit dem freien Gewebeabschnitt bzw. dem Befestigungsabschnitt 14 verklebt, verpresst, verklemmt und/oder anderweitig verbunden werden.

In dem gezeigten Ausführungsbeispiel ist weiterhin dargestellt, dass die äußeren Wandungen 18 der Kammern 9 durch die Gewebelagen 2, 3 gebildet werden. Die Wandungen 19 zwischen den einzelnen Kammern 9 werden durch die Abstandhalteelemente 7 definiert, wobei hier als Wandungen 19 parallel zueinander verlaufende Abstandhalteelemente 7 vorgesehen sind.

In Figur 1a sind dabei der besseren Darstellbarkeit halber die Bereiche zwischen den einzelnen Abstandhalteelemente 7 als weiße Flächen und nicht transparent dargestellt, um die Ausgestaltung der Kammern und des komplexen Gewebes besser zu veranschaulichen.

Die korrekte Ausgestaltung ist in Figur 1b dargestellt, wobei hier das als Vorlage für Figur 1a dienende Foto dargestellt ist.

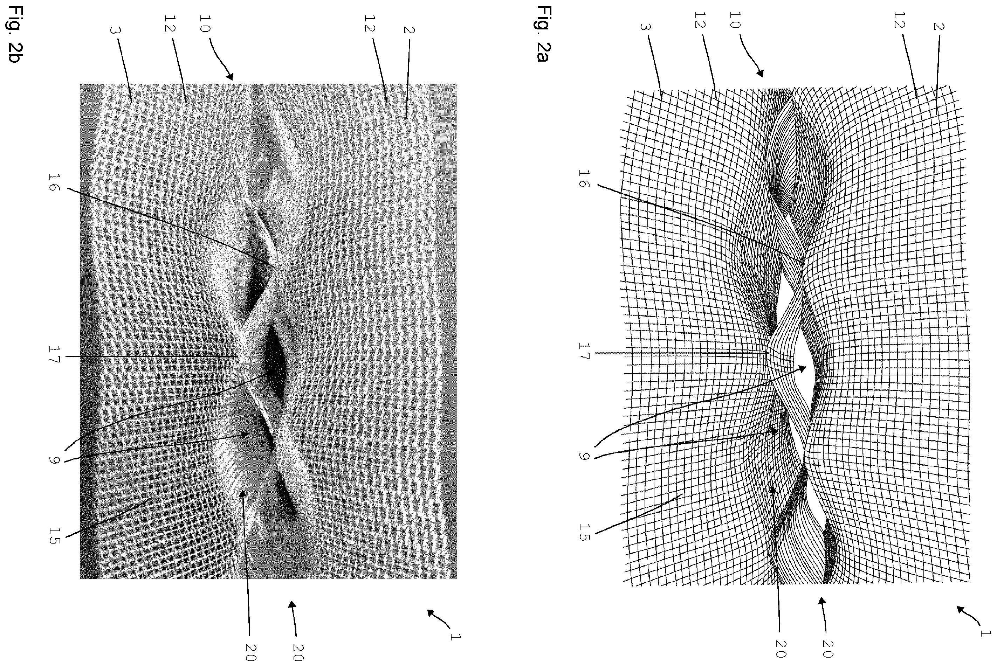

In Figur 2a ist rein schematisch ein weiteres Ausführungsbeispiel eines erfindungsgemäßen Kammergewebes 1 in einer perspektivischen Ansicht dargestellt, wobei der grundsätzliche Aufbau dem schon zuvor gezeigten Ausführungsbeispiel eines Kammergewebes 1 gemäß Figur 1a entspricht.

In dem hier gezeigten Ausführungsbeispiel sind die Kammern 9 jedoch (noch) nicht verschlossen und man hier durch das Kammergewebe 1 bzw. durch die Kammern 9 hindurchsehen.

In dem hier gezeigten Ausführungsbeispiel ist zudem gut zu erkennen, dass die Verbindungsstellen 16, 17 der Gewebelagen 2,3 und der Abstandhalteelemente 7 wie auch in dem Ausführungsbeispiel gemäß Figur 1a versetzt zueinander vorgesehen sind. Hierdurch kommt es quasi zur Ausbildung von 2 Lagen 20 von Kammern, welche ineinandergreifen und eine besonders vorteilhafte Ausgestaltung ermöglichen.

Dabei sind in dem hier gezeigten Ausführungsbeispiel jeweils zwischen der Einbringung eines Abstandhalteelement 7 in eine Gewebelage 2,3 27 Schüsse vorgesehen, bis das Abstandhalteelement 7 wieder in die gleiche Gewebelage 2, 3 eingebunden wird. So wird es möglich, dass im Wesentlichen 3-eckige bzw. rautenförmige Kammerquerschnitte entstehen, in welche ein beliebiges Substrat und/oder bestimmte Gegenstände eingefüllt werden können. Je nach Ausgestaltung können auch andere Abstände vorteilhaft vorgesehen werden.

Dadurch, dass die Verbindungsstellen 16, 17 der Abstandhalteelemente 7 mit den einzelnen Gewebelagen 2, 3 versetzt zueinander und nicht auf gleicher Höhe vorgesehen sind, wird insbesondere vermieden, dass sich die Gewebelagen 2, 3 im Bereich der Verbindungsstellen 16, 17 aufeinander zu bewegen bzw. sogar aneinander liegen.

In Figur 2b ist der Vollständigkeit halber das als Vorlage für die Figur 2a dienende Foto dargestellt.

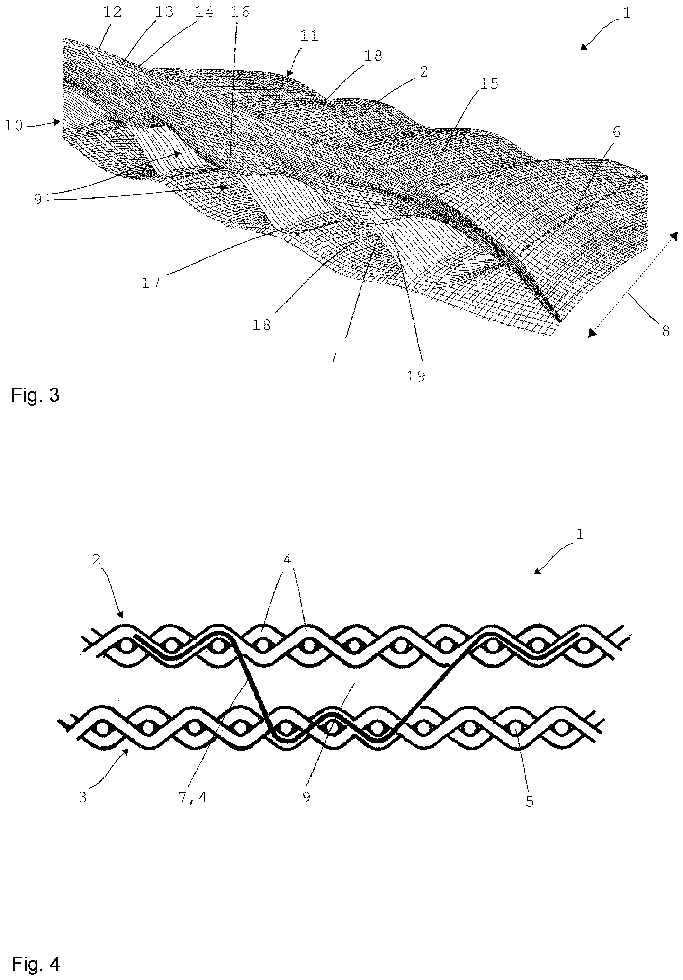

In Figur 3 ist rein schematisch ein erfindungsgemäßes Kammergewebe 1 dargestellt, welches dem Aufbau des Kammergewebes 1 gemäß Figur 1 entspricht.

In dem gezeigten Ausführungsbeispiel ist rein schematisch dargestellt, dass nur an der Seite 10 der Kammern 9 und nur an der Gewebelage 2 ein freier Gewebeabschnitt 12 vorgesehen ist.

Zum Beispiel mit einem solchen Kammergewebe 1 kann ein erfindungsgemäßes zusammengesetztes Gewebe hergestellt werden, wenn ein gleichartiges Kammergewebe 1 beispielsweise in umgekehrter Orientierung mit dem gezeigten Kammergewebe 1 zusammengeführt wird. Dann liegen jeweils die Kammern 9 der einzelnen Kammergewebe 1 aufeinander und können in geeigneter Weise miteinander verbunden werden. Die äußeren Gewebelagen 2 weisen dann jeweils einen freien Gewebeabschnitt 12 auf, sodass auch bei einem solchen zusammengesetzten Gewebe die Kammern 9 durch das Auseinanderziehen mittels der freien Gewebeabschnitte 12 erreicht werden kann.

In Figur 4 ist rein schematisch ein weiteres Ausführungsbeispiel eines erfindungsgemäßen Kammergewebes 1 von der Seite dargestellt.

Hier ist rein schematisch dargestellt, dass Ketteelemente 4 und Schusselemente 5 vorgesehen sind, wobei angedeutet ist, dass die Abstandhalteelemente 7 in die Gewebelagen 2, 3 flottierend integriert sind. Dabei werden hier die Abstandhalteelement 7 durch Kettelemente 4 bereitgestellt.

### Bezugszeichenliste

- 1: Kammergewebe
- 2: Gewebelage
- 3: Gewebelage
- 4: Kettelement
- 5: Schusselement
- 6: Gewebekörper
- 7: Abstandhalteelemente
- 8: erste Erstreckung
- 9: Kammer
- 10: Seite
- 11: Seite
- 12: freier Gewebeabschnitt
- 13: Handhabungsabschnitt
- 14: Befestigungsabschnitt
- 15: Drahtgewebelage
- 16: Verbindungsstelle
- 17: Verbindungsstelle
- 18: Wandung
- 19: Wandung
- 20: Lage

## Patentansprüche

1. Kammergewebe (1) umfassend wenigstens zwei im Abstand zueinanderstehende Gewebelagen (2, 3), wobei jede Gewebelage (2, 3) in wenigstens einer vorbestimmten Bindungsart festgelegte Kettelemente (4) und Schusselemente (5) umfasst, wobei die Gewebelagen (2, 3) wenigstens in dem Bereich wenigstens eines Gewebekörpers (6) durch flottierende Abstandhalteelemente (7) miteinander verbunden sind, wobei die Abstandhalteelemente (7) wechselweise von der einen Gewebelage (2) zu der anderen Gewebelage (3) verspringen und die wenigstens im Bereich zwischen den Gewebelagen (2, 3) bindungsfrei sind, sodass zwischen den Gewebelagen (2, 3) und den Abstandhalteelementen (7) wenigstens entlang einer ersten Erstreckung (8) des Gewebekörpers (6) wenigstens eine wenigstens abschnittsweise begrenzte Kammer (9) ausgebildet wird,
**dadurch gekennzeichnet,**
**dass** wenigstens an einer Seite (10, 11) des Gewebekörpers (6) in Richtung der ersten Erstreckung (8) des Gewebekörpers (6) wenigstens eine Gewebelage (2, 3) als freier Gewebeabschnitt (12) weitergeführt ist.

2. Kammergewebe (1) nach Anspruch 1, wobei wenigstens an einer Seite (10, 11) des Gewebekörpers (6) in Richtung der ersten Erstreckung (8) des Gewebekörpers (6) beide Gewebelagen (2, 3) wenigstens abschnittsweise als freie Gewebeabschnitte (12) weitergeführt sind.

3. Kammergewebe (1) nach einem der vorhergehenden Ansprüche, wobei an beiden Seiten (10, 11) des Gewebekörpers (6) in Richtung der ersten Erstreckung (8) des Gewebekörpers (6) wenigstens eine Gewebelage (2, 3) und insbesondere beide Gewebelagen (2, 3) als freier Gewebeabschnitt (12) weitergeführt ist.

4. Kammergewebe (1) nach einem der vorhergehenden Ansprüche, wobei das Kammergewebe (1) in einem einzigen Webvorgang hergestellt ist und/oder wobei die Abstandhalteelemente (7) durch Kettelemente (4) und/oder Schusselemente (5) bereitgestellt werden.

5. Kammergewebe (1) nach einem der vorhergehenden Ansprüche, wobei der freie Gewebeabschnitt (12) und die Gewebelagen (2, 3) im Bereich des Gewebekörpers (6) gleiche und/oder unterschiedliche Bindungsarten aufweisen.

6. Kammergewebe (1) nach einem der vorhergehenden Ansprüche, wobei der freie Gewebeabschnitt (12) wenigstens abschnittsweise als Handhabungsabschnitt (13) dient und/oder wobei der freie Gewebeabschnitt (12) wenigstens abschnittsweise als Befestigungsabschnitt (14) dient.

7. Kammergewebe (1) nach einem der vorhergehenden Ansprüche, wobei wenigstens eine Gewebelage (2, 3) wenigstens eine Drahtgewebelage (15) umfasst und/oder wobei die Ketteelemente (4), die Schusselemente (5) und/oder die Abstandhalteelemente (7) wenigstens teilweise aus Draht, Kunststoff, Carbon und/oder Fiberglas gefertigt sind.

8. Kammergewebe (1) nach einem der vorhergehenden Ansprüche, wobei die Verbindungsstellen (16, 17) der Abstandhalteelemente (7) mit der ersten und zweiten Gewebelage versetzt zueinander vorgesehen sind und/oder wobei wenigstens eine Gewebelage (2, 3) eine Wandung (18) einer Kammer (9) bildet und wobei die anderen Wandungen (19) von den Abstandhalteelementen gebildet werden.

9. Kammergewebe (1) nach dem vorhergehenden Anspruch, wobei zwei Lagen (20) von Kammern (9) vorgesehen sind und wobei ein Abstandhalteelement (7) die Wandung (19) von wenigstens einer oberen und einer unteren Kammer (9) bildet.

10. Kammergewebe (1) nach einem der vorhergehenden Ansprüche, wobei die Kammer (9) an wenigstens einer Seite geschlossen ist, wobei die Kammer (9) insbesondere verschlossen gewebt ist, durch das Verkleben der beiden Gewebelagen (2, 3) verschlossen ist und/oder durch das Einkleben, Einsetzen und/oder Einpressen wenigstens eines Verschlusselements verschlossen wird.

11. Kammergewebe (1) nach einem der vorhergehenden Ansprüche, wobei mehr als zwei Gewebelagen (2, 3) vorgesehen sind.

12. Kammergewebe (1) nach einem der vorhergehenden Ansprüche, wobei der maximal mögliche Abstand zwischen den Gewebelagen (2, 3) durch die freie Länge der Abstandshalteelemente (7) bestimmt ist.

13. Zusammengesetztes Gewebe umfassend wenigstens zwei Kammergewebe (1) nach einem der vorhergehenden Ansprüche.

14. Verfahren zum Verwenden eines Kammergewebes (1) nach einem der vorhergehenden Ansprüche 1 bis 12 , **dadurch gekennzeichnet,**
**dass** die Kammer (9) mittels des freien Gewebeabschnitts (12) geöffnet werden.

15. Verfahren nach dem vorhergehenden Anspruch, wobei beide Gewebelagen (2, 3) jeweils wenigstens einen freien Gewebeabschnitt (12) umfassen, wobei das Öffnen der Kammer (9) wenigstens abschnittsweise durch das Auseinanderbewegen der freien Gewebeabschnitte (12) erfolgt.

## Claims

1. A chamber fabric (1), comprising at least two spaced-apart fabric layers (2, 3), wherein each fabric layer (2, 3) comprises warp elements (4) and weft elements (5) fixed in at least one predetermined weave type, wherein the fabric layers (2, 3) are connected to one another at least in the region of at least one fabric body (6) by floating spacer elements (7), wherein the spacer elements (7) alternately project from one fabric layer (2) to the other fabric layer (3) and are weave-free at least in the region between the fabric layers (2, 3), so that at least along a first extent (8) of the fabric body (6), at least one chamber (9) delimited at least in sections is formed between the fabric layers (2, 3) and the spacer elements (7),
**characterized in**
**that** at least on one side (10, 11) of the fabric body (6), at least one fabric layer (2, 3) is continued as a free fabric section (12) in the direction of the first extent (8) of the fabric body (6).

2. The chamber fabric (1) according to claim 1, wherein at least on one side (10, 11) of the fabric body (6), both fabric layers (2, 3) are continued at least in sections as free fabric sections (12) in the direction of the first extent (8) of the fabric body (6).

3. The chamber fabric (1) according to one of the preceding claims, wherein on both sides (10, 11) of the fabric body (6) at least one fabric layer (2, 3) and in particular both fabric layers (2, 3) are continued as free fabric section (12) in the direction of the first extent (8) of the fabric body (6).

4. The chamber fabric (1) according to any one of the preceding claims, wherein the chamber fabric (1) is produced in a single weaving process and/or wherein the spacer elements (7) are provided by warp elements (4) and/or weft elements (5).

5. The chamber fabric (1) according to any one of the preceding claims, wherein the free fabric section (12) and the fabric layers (2, 3) in the region of the fabric body (6) have the same and/or different weave types.

6. The chamber fabric (1) according to any one of the preceding claims, wherein the free fabric section (12) serves at least in sections as a handling section (13), and/or wherein the free fabric section (12) serves at least in sections as a fastening section (14).

7. The chamber fabric (1) according to any one of the preceding claims, wherein at least one fabric layer (2, 3) comprises at least one wire fabric layer (15), and/or wherein the warp elements (4), the weft elements (5), and/or the spacer elements (7) are at least partially made of wire, plastics, carbon and/or fiberglass.

8. The chamber fabric (1) according to any one of the preceding claims, wherein the connection points (16, 17) of the spacer elements (7) with the first and second fabric layers are provided offset to one another, and/or wherein at least one fabric layer (2, 3) forms a wall (18) of a chamber (9), and wherein the other walls (19) are formed by the spacer elements.

9. The chamber fabric (1) according to the preceding claim, wherein two layers (20) of chambers (9) are provided, and wherein one spacer element (7) forms the wall (19) of at least one upper and one lower chamber (9).

10. The chamber fabric (1) according to any one of the preceding claims, wherein the chamber (9) is closed on at least one side, wherein the chamber (9) is in particular woven in a closed manner, is closed by glueing the two fabric layers (2, 3) and/or is closed by glueing in, inserting and/or pressing in at least one closing element.

11. The chamber fabric (1) according to any one of the preceding claims, wherein more than two fabric layers (2, 3) are provided.

12. The chamber fabric (1) according to any one of the preceding claims, wherein the maximum possible distance between the fabric layers (2, 3) is determined by the free length of the spacer elements (7).

13. A composite fabric, comprising at least two chamber fabrics (1) according to any one of the preceding claims.

14. A method for using a chamber fabric (1) according to any one of the preceding claims 1 to 12,
**characterized in**
**that** the chamber (9) is opened by means of the free fabric section (12).

15. The method according to the preceding claim, wherein both fabric layers (2, 3) each comprise at least one free fabric section (12), wherein opening the chamber (9) is carried out at least in sections by moving the free fabric sections (12) apart.

## Revendications

1. Tissu alvéolaire (1) comprenant au moins deux couches de tissu espacées (2, 3), chaque couche de tissu (2, 3) d'au moins un type de liaison prédéterminé comprenant des éléments de chaîne fixes (4) et des éléments de trame (5), les couches de tissu (2, 3) étant reliées entre elles au moins dans la zone d'au moins un corps textile (6) par des éléments d'écartement flottants (7), les éléments d'écartement (7) alternant d'une couche de tissu (2) à l'autre couche de tissu (3) et étant exempts de liaison au moins dans la zone située entre les couches de tissu (2, 3), de sorte que, entre les couches de tissu (2, 3) et les éléments d'écartement (7), au moins une chambre (9) limitée au moins par sections soit formée au moins le long d'un premier prolongement (8) du corps de tissu (6).
**caractérisé en ce qu'**au moins une couche de tissu (2, 3) se prolonge sous forme d'une section de tissu libre (12) sur au moins un côté (10, 11) du corps de tissu (6) en direction du premier prolongement (8) du corps de tissu (6).

2. Tissu alvéolaire (1) selon la revendication 1, dans lequel, au moins sur un côté (10, 11) du corps de tissu (6) en direction du premier prolongement (8) du corps de tissu (6), les deux couches de tissu (2, 3) se prolongent au moins partiellement sous forme de sections de tissu libres (12).

3. Tissu alvéolaire (1) selon l'une des revendications précédentes, dans lequel au moins une couche de tissu (2, 3) et en particulier les deux couches de tissu (2, 3) se prolongent sous forme d'une section de tissu libre (12) des deux côtés (10, 11) du corps de tissu (6) en direction du premier prolongement (8) du corps de tissu (6).

4. Tissu alvéolaire (1) selon l'une quelconque des revendications précédentes, dans lequel le tissu alvéolaire (1) est fabriqué en un seul processus de tissage et/ou dans lequel les éléments d'écartement (7) sont constitués par des éléments de chaîne (4) et/ou des éléments de trame (5).

5. Tissu alvéolaire (1) selon l'une quelconque des revendications précédentes, dans lequel la section de tissu libre (12) et les couches de tissu (2, 3) dans la zone du corps de tissu (6) présentent des types de liaison identiques et/ou différents.

6. Tissu alvéolaire (1) selon l'une quelconque des revendications précédentes, dans lequel la section de tissu libre (12) sert au moins partiellement de section de manipulation (13) et/ou la section de tissu libre (12) sert au moins partiellement de section de fixation (14).

7. Tissu alvéolaire (1) selon l'une quelconque des revendications précédentes, dans lequel au moins une couche de tissu (2, 3) comprend au moins une couche de tissu métallique (15) et/ou dans lequel les éléments de chaîne (4), les éléments de trame (5) et/ou les éléments d'écartement (7) sont au moins partiellement constitués de fil métallique, de matière plastique, de carbone et/ou de fibres de verre.

8. Tissu alvéolaire (1) selon l'une des revendications précédentes, dans lequel les points de liaison (16, 17) des éléments d'écartement (7) sont décalés l'un par rapport à l'autre avec la première et la seconde couche de tissu et/ou au moins une couche de tissu (2, 3) forme une paroi (18) d'une chambre (9) et les autres parois (19) sont formées par les éléments d'écartement.

9. Tissu alvéolaire (1) selon la revendication précédente, dans lequel deux couches (20) de chambres (9) sont prévues et dans lequel un élément d'écartement (7) forme la paroi (19) d'au moins une chambre supérieure et une chambre inférieure (9).

10. Tissu alvéolaire (1) selon l'une quelconque des revendications précédentes, dans lequel la chambre (9) est fermée sur au moins un côté, la chambre (9) étant en particulier fermée par tissage, fermée par collage des deux couches de tissu (2, 3) et/ou fermée par collage, insertion et/ou enfoncement d'au moins un élément de fermeture.

11. Tissu alvéolaire (1) selon l'une quelconque des revendications précédentes, dans lequel plus de deux couches de tissu (2, 3) sont prévues.

12. Tissu alvéolaire (1) selon l'une des revendications précédentes, dans lequel la distance maximale possible entre les couches de tissu (2, 3) est déterminée par la longueur libre des éléments d'écartement (7).

13. Tissu composite comprenant au moins deux tissus alvéolaires (1) selon l'une quelconque des revendications précédentes.

14. Procédé d'utilisation d'un tissu de chambre (1) selon l'une quelconque des revendications précédentes 1 à 12, **caractérisé en ce que** la chambre (9) est ouverte au moyen de la section de tissu libre (12).

15. Procédé selon la revendication précédente, dans lequel les deux couches de tissu (2, 3) comprennent chacune au moins une section de tissu libre (12), l'ouverture de la chambre (9) se faisant au moins par sections par écartement des sections de tissu libres (12).
